# EUROPÄISCHE PATENTANMELDUNG

(11) **EP 1 199 683 A1**
(43) Veröffentlichungstag der Anmeldung: **24.04.2002**
(21) Anmeldenummer: 00890314.8
(22) Anmeldetag: 17.10.2000
(51) Int. Cl.: G07F 7/00, G07F 7/10, G06F 17/60

(54) **Verfahren und Vorrichtung zum Vornehmen und Einlösen von Reservierungen**

(71) Anmelder: Walter, Michael, Ing., 1010 Wien (AT)
(72) Erfinder: Walter, Michael, Ing., 1010 Wien (AT)
(74) Vertreter: Weiser, Andreas, Dipl.-Ing.

(57) **Zusammenfassung**

Verfahren zum Vornehmen und Einlösen von Reservierungen für Waren- oder Dienstleistungsbezüge, mit den Schritten:
(a) Empfangen einer Banknotennummer (N°) einer Banknote (10) aus einer Menge eindeutig numerierter Banknoten,
(b) Aufbewahren der empfangenen Banknotennummer (N°) in einem Speicher (5) als gültige Reservierung für einen Waren- oder Dienstleistungsbezug,
(c) Empfangen einer Banknote (10) und Lesen ihrer Banknotennummer (N°),
(d) Überprüfen, ob die gelesene Banknotennummer (N°) als gültige Reservierung gespeichert ist, und, wenn ja,
(e) Gestatten des Waren oder Dienstleistungsbezuges.

## Beschreibung

Die vorliegende Erfindung betrifft ein Verfahren und eine Vorrichtung zum Vornehmen und Einlösen von Reservierungen für Waren- oder Dienstleistungsbezüge.

Beim Bezug von Waren oder Dienstleistungen aufgrund von Bestellungen, Vorreservierungen usw. besteht das Problem, den Abholer oder Nutzer der Ware bzw. Dienstleistung bei der Einlösung der Reservierung als denjenigen zu identifizieren, welcher die Reservierung vorgenommen hat. Wenn der Benutzer bei der Vornahme der Reservierung eine materielle Reservierungsbestätigung in Form eines Warenbezugsscheins, eines Eintrittstickets, einer Fahrkarte usw. erhalten hat, ist das relativ einfach: Die Identifizierung ist gewährleistet, indem der Benutzer diese bei der Einlösung vorweist.

Solche Karten, Tickets, Bezugsscheine usw. müssen jedoch möglichst fälschungssicher gestaltet werden, um einen Mißbrauch oder Betrug zu verhindern, was mit einem beträchtlichen Kostenaufwand verbunden ist. Die Kosten für weitgehend fälschungssichere Eintrittstickets können z.B. einen nennenswerten Prozentsatz des Gegenwertes des Tickets ausmachen.

Bei Fernreservierungen über Telefon, Internet oder andere Telekommunikationsmittel wird in der Regel auf eine materielle Reservierungsbestätigung verzichtet. So wird bei Kleinbestellungen im Versandhandel, bei der Reservierung einer Theater- oder Kinokarte, eines Tisches in einem Restaurant, eines Friseurtermines usw. entweder ausschließlich auf Vertrauensbasis gearbeitet, oder die bestellte Ware oder reservierte Dienstleistung muß in einem bestimmten Zeitfenster abgeholt oder konsumiert werden, andernfalls die Reservierung verfällt.

Eine geringfügige Verbesserung stellen Fernreservierungssysteme dar, bei welchen dem Nutzer anläßlich der Annahme der Reservierung ein Codewort oder eine Reservierungsnummer zugeteilt wird, das bzw. die bei Einlösung der Reservierung zur Identifikation angegeben werden muß. Die Handhabung von Codewörter oder Reservierungsnummern ist jedoch wegen des Aufwandes des Notierens oder Merkens mühsam und umständlich.

Es besteht daher ein Bedarf nach einem Reservierungssystem, welches für Fernreservierungen geeignet ist, eine eindeutige, fälschungs- und betrugssichere Identifikation des Benutzers bei der Einlösung der Reservierung ermöglicht und für den Benutzer einfach handhabbar ist. Die Erfindung setzt sich zum Ziel, ein derartiges System zu schaffen.

Dieses Ziel wird in einem ersten Aspekt der Erfindung mit einem Verfahren zum Vornehmen und Einlösen von Reservierungen für Waren- oder Dienstleistungsbezüge erreicht, das sich auszeichnet durch die Schritte
(a) Empfangen einer Banknotennummer einer Banknote aus einer Menge eindeutig numerierter Banknoten,
(b) Aufbewahren der empfangenen Banknotennummer in einem Speicher als gültige Reservierung für einen Waren- oder Dienstleistungsbezug,
(c) Empfangen einer Banknote und Lesen ihrer Banknotennummer,
(d) Überprüfen, ob die gelesene Banknotennummer als gültige Reservierung gespeichert ist, und, wenn ja,
(e) Gestatten des Waren oder Dienstleistungsbezuges.

Auf diese Weise wird die Seriennumerierung einer Banknote als eindeutige Reservierungsnummer und die Banknote als Ausweis selbst zum Aufbau eines überraschend einfachen Reservierungssystems mit hoher Fälschungssicherheit genutzt. Die Anfertigung von gesonderten, fälschungssicheren Tickets und die damit verbundenen hohen Kosten entfallen zur Gänze. Banknoten sind überall verfügbar, auf Grund ihrer Seriennummer einzigartig, in hohem Maße fälschungssicher, weitergebbar bzw. übertragbar, sowie automatisierbar in ihrer Erkennung, Verarbeitung und Abrechnung.

Für das erfindungsgemäße Reservierungssystem eignet sich jede Art von Banknote, da alle heute im Umlauf befindlichen Banknoten einer Serie eindeutig durchnumeriert sind. Es versteht sich, daß der Begriff "Banknotennummer" die Angabe der Währung bzw. Banknotenart mitumfassen kann, wenn das System mit Banknoten verschiedene Art arbeiten soll. Wenn das System jedoch nur in einem bestimmten Land betrieben wird, ist das in der Regel nicht erforderlich: In diesem Fall werden die Banknotenserien dieses Landes als vorgegebene Menge eindeutig numerierter Banknoten zugrundegelegt.

In einer bevorzugten Ausführungsform der Erfindung wird der Reservierung im Speicher zusätzlich eine Waren- oder Dienstleistungsidentifikation zugeordnet. Eine solche Waren- oder Dienstleistungsidentifikation kann z.B. die Bestellnummer einer Ware, die Sitzplatznummer eines Eintrittstickets, der örtliche und zeitliche Geltungsbereich einer Fahrkarte und/oder der Gegenwert der Ware oder Dienstleistung sein. Bei der Reservierung von Eintrittskarten werden beispielsweise die Platznummer sowie Zeit und Ort der Veranstaltung der Reservierung zugewiesen. Bevorzugt wird die zugewiesene Waren- oder Dienstleistungsidentifikation auch als Reservierungsbestätigung an den Benutzer ausgegeben.

In einer weiteren bevorzugten Variante des Verfahrens wird die Reservierung nach Gestattung des Waren- oder Dienstleistungsbezuges für ungültig erklärt oder aus dem Speicher gelöscht. Diese Variante eignet sich für den Einmalbezug von Waren oder Dienstleistungen, z.B. einen Eintritt zu einer Veranstaltung. Dabei ist es besonders günstig, wenn gemäß einem weiteren Merkmal der Erfindung die empfangene Banknote gleich zur Bezahlung des Waren- oder Dienstleistungsbezuges verwendet wird. Dies verringert das Zahlungsausfallrisiko des Betreibers bei der Einlösung der Reservierung.

Eine andere Verfahrensvariante besteht darin, daß die Reservierung nach Ablauf einer vorgegebenen Zeitspanne für ungültig erklärt oder aus dem Speicher gelöscht wird. Dies kann einerseits dazu verwendet werden, nicht eingelöste, "vergessene" Reservierungen in regelmäßigen Abständen aus dem System zu entfernen, anderseits können so Zeitbezugs- oder Berechtigungskarten realisiert werden. So kann eine Reservierung für die Dienstleistung "Benutzung der U-Bahn" z.B. einen Monat gültig sein, und die Banknote mit der entsprechenden Banknotennummer stellt eine Monatskarte für das U-Bahnnetz dar.

In einem zweiten Aspekt schafft die Erfindung eine Vorrichtung zum Vornehmen und Einlösen von Reservierungen für Waren- oder Dienstleistungsbezüge, mit:
einer Datenverarbeitungsanlage mit Eingabe-, Verarbeitungs-, Speicher- und Ausgabemitteln, wobei die Speichermittel über die Eingabemittel Banknotennummern als gültige Reservierungen für einen Waren- oder Dienstleistungsbezug aufnehmen,
einem Banknotenlesegerät, das zur Erkennung der Banknotennummer einer Banknote ausgebildet ist und eine erkannte Banknotennummer an die Datenverarbeitungsanlage sendet,
wobei die Verarbeitungsmittel verifizieren, ob die empfangene Banknotennummer als gültige Reservierung gespeichert ist, und im Verifizierungsfalle die Ausgabemittel ansteuern.

Die erfindungsgemäße Vorrichtung ermöglicht einen weitgehend automatisierten Ablauf des beschriebenen Verfahrens mit all seinen Vorteilen.

Bevorzugt können die Verarbeitungsmittel eine gespeicherte Reservierung nach Ablauf einer vorgegebenen Zeitspanne aus dem Speicher löschen oder als ungültig eintragen, um die Integrität und Funktionsfähigkeit der Vorrichtung im Langzeitbetrieb zu gewährleisten.

Eine besonders vorteilhafte Ausführungsform der Erfindung zeichnet sich darüber hinaus durch eine Zutrittskontrolleinrichtung aus, wobei die Verarbeitungsmittel im Verifizierungsfalle die Zutrittskontrolleinrichtung freischalten. Die erfindungsgemäße Vorrichtung eignet sich dadurch als automatische Verrechnungs- und Zutrittsschranke für Theater, Kinos, Großveranstaltungen, Stadien, Massenbeförderungsmittel usw.

Besonders vorteilhaft ist es hiebei, wenn das Banknotenlesegerät auch mit einem Sammelbehälter für Banknoten ausgestattet ist, wobei die Verarbeitungsmittel im Verifizierungsfalle das Banknotenlesegerät zur Einsammlung der gelesenen Banknote im Sammelbehälter ansteuern. Dies minimiert das Risiko eines Veranstalters.

In einem beispielhaften Anwendungsfall können die Eingänge von Stadien mit der geschilderten Vorrichtung ausgestattet werden, in welche die Benutzer Banknoten sowohl als Reservierungsbestätigung, Ticket als auch Bezahlung eingeben. Die Banknotennummer wurde zuvor im Zuge der Sitzplatzreservierung über Telefon, Internet usw. in das System eingegeben.

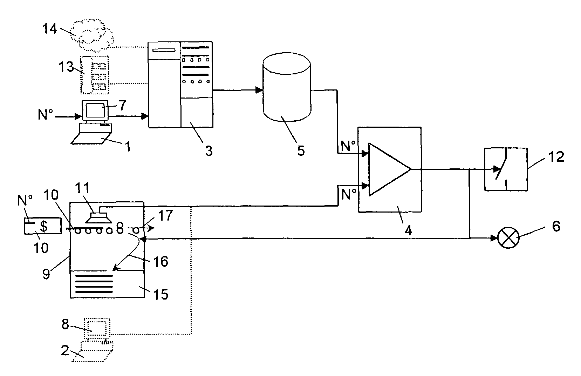

Die Erfindung wird nachstehend an Hand eines in der Zeichnung schematisch dargestellten Ausführungsbeispieles näher erläutert. Die Zeichnung zeigt das Blockschaltbild einer Vorrichtung gemäß der Erfindung.

Die Figur zeigt eine Datenverarbeitungsanlage mit mehreren Eingabemitteln 1, 2, Verarbeitungsmitteln 3, 4, Speichermitteln 5 und Ausgabemitteln 6, 7 und 8. Es versteht sich, daß die Aufteilung der Datenverarbeitungsanlage in der Praxis anders gestaltet sein kann. Beispielsweise könnten die gezeigten Komponenten 3-5 auch durch entsprechende Softwaremodule auf einem einzigen Rechner implementiert werden.

An die Datenverarbeitungsanlage 1-8 ist ein Banknotenlesegerät 9 angeschlossen, welches Banknoten 10 empfängt. Jede Banknote 10 ist Bestandteil einer vorgegebenen Menge von Banknoten, z.B. der Banknotenserie einer Landeswährung, und mit einer eindeutigen Banknotennummer N° versehen.

Das Banknotenlesegerät 9 überprüft die Gültigkeit einer Banknote 10, wie in der Technik bekannt. Darüber hinaus enthält das Banknotenlesegerät 9 einen Detektor 11, welcher die Banknotennummer N° der Banknote 10 detektiert, auswertet und an die Datenverarbeitungsanlage 1-8 sendet. Ein Banknotenlesegerät, welches zur Erkennung der Banknotennummer ausgebildet ist, ist beispielsweise in der GB 2 251 110 beschrieben.

Die Datenverarbeitungsanlage 1-8 steuert eine Zutrittskontrolleinrichtung 12. Die Zutrittskontrolleinrichtung 12 kann beispielsweise ein Drehkreuz für den Personenzugang, eine Personenschleuse, ein Tor od.dgl. sein.

Das Verfahren der Erfindung wird nun an Hand der Betriebsweise der Vorrichtung erläutert. Bei der Vornahme einer Reservierung wird zunächst die Banknotennummer N° einer Banknote 10 mit Hilfe der Eingabemittel 1 und Verarbeitungsmittel 3 im Speicher 5 als "gültige Reservierung" für einen Waren- oder Dienstleistungsbezug abgelegt. Die Verarbeitungsmittel 3 können dabei eine Plausibilitätsprüfung und/oder Verifizierung der Banknotennummer N° durchführen, beispielsweise durch einen Vergleich mit einem Datenbestand möglicher oder zulässiger Banknotennummern.

Optional teilen die Verarbeitungsmittel 3 der gespeicherten Reservierung eine Waren- oder Dienstleistungsidentifikation zu. Diese Waren- oder Dienstleistungsidentifikation kann beispielsweise die Nummer einer bestellten Ware, eine Sitzplatznummer, eine Fahrkartennummer usw. sein. Die zugewiesene Waren- oder Dienstleistungsidentifikation kann über die Ausgabemittel 7 als Reservierungsbestätigung ausgegeben werden.

Banknotennummern N° können auf beliebige Art und Weise in das System, genauer den Speicher 5, eingegeben werden. Beispielsweise kann eine Banknotennummer N° über ein Tastwahltelefon 13 an die Verarbeitungsmittel 3 geleitet werden. Die Verarbeitungsmittel 3 können den Benutzer dabei mit Hilfe eines Sprachmenüsystems (Voice Response Unit, VRU) führen. Die Verarbeitungsmittel 3 könnten auch eine Spracherkennung von eingesprochenen Banknotennummer N° durchführen. Eine weitere Variante besteht darin, Banknotennummern N° über das Internet 14 zu empfangen. Die Verarbeitungsmittel 3 nehmen dabei die Rolle eines Internetservers ein.

Zur Einlösung der Reservierung führt der Benutzer die Banknote 10 mit der entsprechenden Banknotennummer N° in das Banknotenlesegerät 9 ein. Das Banknotenlesegerät 9 wertet die Banknotennummer N° aus und sendet sie an die Verarbeitungsmittel 4. Die Verarbeitungsmittel 4 üben die Funktion eines Vergleichers aus und überprüfen, ob die vom Banknotenlesegerät 9 gelesene Banknotennummer N° im Speicher 5 als gültige Reservierung vorliegt. Wenn ja, d.h. im Verifizierungsfalle, schalten die Verarbeitungsmitteln die Zutrittskontrolleinrichtung 12 frei und zeigen dies auf den Ausgabemitteln 6 an.

Die Verarbeitungsmittel 4 können im Verifizierungsfalle das Banknotenlesegerät 9 anweisen, eine gelesene Banknote 10 einzuziehen. Zu diesem Zweck ist das Banknotenlesegerät 9 mit einem Sammelbehälter 15 ausgestattet, in welchen gelesene Banknoten 10 über einen Pfad 16 übergeführt werden. Ist die Banknote 10 jedoch gefälscht oder stellt ihre Banknotennummer N° keine gültige Reservierung dar, oder ist sie eine gültige Reservierung für einen mehrmaligen Waren- oder Dienstleistungsbezug, wird die Banknote 10 über einen Pfad 17 dem Benutzer retourniert.

In einer vereinfachten Variante des Verfahrens und der Vorrichtung kann eine Banknote 10 auch einer Bedienungsperson der Datenverarbeitungsanlage 1-8 präsentiert werden, welche die Banknotennummer N° über die Eingabemittel 2 eingibt. Das Ergebnis des Vergleiches mit den gültigen Reservierungen im Speicher 5 kann von der Bedienungsperson an den Anzeigemitteln 6 oder 8 abgelesen werden.

Das vorgestellte Verfahren und die vorgestellte Vorrichtung können sowohl mittels Hardware als auch Software realisiert werden. Auch ist es möglich, das Verfahren mit vereinfachten technischen Mitteln durchzuführen. Beispielsweise können empfangene Banknotennummern N° in einer Kartei gespeichert werden und die Verifizierung einer gelesenen Banknotennummer N° erfolgt durch Nachschlagen in der Kartei.

## Patentansprüche

1. Verfahren zum Vornehmen und Einlösen von Reservierungen für Waren- oder Dienstleistungsbezüge, **gekennzeichnet durch** die Schritte
(a) Empfangen einer Banknotennummer (N°) einer Banknote (10) aus einer Menge eindeutig numerierter Banknoten,
(b) Aufbewahren der empfangenen Banknotennummer (N°) in einem Speicher (5) als gültige Reservierung für einen Waren- oder Dienstleistungsbezug,
(c) Empfangen einer Banknote (10) und Lesen ihrer Banknotennummer (N°),
(d) Überprüfen, ob die gelesene Banknotennummer (N°) als gültige Reservierung gespeichert ist, und, wenn ja,
(e) Gestatten des Waren oder Dienstleistungsbezuges.

2. Verfahren nach Anspruch 1, **dadurch gekennzeichnet, daß** der Reservierung im Speicher eine Waren- oder Dienstleistungsidentifikation zugeordnet wird.

3. Verfahren nach Anspruch 2, **dadurch gekennzeichnet, daß** die zugewiesene Waren- oder Dienstleistungsidentifikation als Reservierungsbestätigung ausgegeben wird.

4. Verfahren nach einem der Ansprüche 1 bis 3, **dadurch gekennzeichnet, daß** die Reservierung nach Gestattung des Waren- oder Dienstleistungsbezuges für ungültig erklärt oder aus dem Speicher gelöscht wird.

5. Verfahren nach Anspruch 4, **dadurch gekennzeichnet, daß** die empfangene Banknote zur Bezahlung des Waren- oder Dienstleistungsbezuges verwendet wird.

6. Verfahren nach einem der Ansprüche 1 bis 5, **dadurch gekennzeichnet, daß** die Reservierung nach Ablauf einer vorgegebenen Zeitspanne für ungültig erklärt oder aus dem Speicher gelöscht wird.

7. Vorrichtung zum Vornehmen und Einlösen von Reservierungen für Waren- oder Dienstleistungsbezüge, mit:
einer Datenverarbeitungsanlage (1-8) mit Eingabemittel (1, 2), Verarbeitungsmittel (3, 4), Speichermittel (5) und Ausgabemitteln (6-8), wobei die Speichermittel über die Eingabemittel Banknotennummern (N°) als gültige Reservierungen für einen Waren- oder Dienstleistungsbezug aufnehmen,
einem Banknotenlesegerät (9), das zur Erkennung der Banknotennummer (N°) einer Banknote (10) ausgebildet ist und eine erkannte Banknotennummer an die Datenverarbeitungsanlage (1-8) sendet,
wobei die Verarbeitungsmittel (4) verifizieren, ob die empfangene Banknotennummer (N°) als gültige Reservierung gespeichert ist, und im Verifizierungsfalle die Ausgabemittel (6) ansteuern.

8. Vorrichtung nach Anspruch 7, **dadurch gekennzeichnet, daß** die Verarbeitungsmittel (3, 4) eine gespeicherte Reservierung nach Ablauf einer vorgegebenen Zeitspanne aus dem Speicher löschen oder als ungültig eintragen.

9. Vorrichtung nach Anspruch 7 oder 8, **gekennzeichnet durch** eine Zutrittskontrolleinrichtung (12), wobei die Verarbeitungsmittel (4) im Verifizierungsfalle die Zutrittskontrolleinrichtung (12) freischalten.

10. Vorrichtung nach Anspruch 9, **dadurch gekennzeichnet, daß** das Banknotenlesegerät (9) mit einem Sammelbehälter (15) für Banknoten (10) ausgestattet ist, wobei die Verarbeitungsmittel (4) im Verifizierungsfalle das Banknotenlesegerät (9) zur Einsammlung der gelesenen Banknote (10) im Sammelbehälter (15) ansteuern.
